(19)

Europäisches
Patentamt
European
Patent Office
Office européen
des brevets

(11) **EP 2 835 518 A1**

(12) **EUROPEAN PATENT APPLICATION**

(43) Date of publication:
**11.02.2015 Bulletin 2015/07**

(51) Int Cl.:
*F02D 41/00* (2006.01)　　*F02D 19/06* (2006.01)

(21) Application number: **13179273.1**

(22) Date of filing: **05.08.2013**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Delphi International Operations Luxembourg S.à r.l.**
**4940 Bascharage (LU)**

</td><td>

(72) Inventors:
• **Nilsson, Andreas**
**London, W5 2NB (GB)**
• **Harcombe, Anthony**
**Richmond, Surrey TW10 5DZ (GB)**

(74) Representative: **Neill, Andrew Peter**
**Delphi Diesel Systems**
**Patent Department**
**Courteney Road**
**Gillingham, Kent ME8 0RU (GB)**

</td></tr>
</table>

(54) **Method to Determine Bulk Modulus of a Fuel**

(57)　　A method for determining the bulk modulus of a fuel used in a fuel injection system of an internal combustion engine, said fuel injection system including a fuel accumulator volume or common rail for the supply of fuel to one or more fuel injectors, pumping means to pressurise fuel in said common rail/accumulator volume, comprising the steps of implementing a pumping event, measuring the consequential increase in pressure in said accumulator volume; and, determining the bulk modulus from said increase/change in pressure.

FIG 3a

Figure 1: Pumping lift as function of cam lobe profile

EP 2 835 518 A1

**(Cont. next page)**

FIG 3 B

Figure 2: Pressure rise as function of pumping lift

**Description**

**Field of the Invention**

This disclosure relates to fuel injection systems for internal combustion engines. It has particular, but non-exclusive application, to common rail fuel systems for diesel engines. In such systems, a drive current is typically supplied to a fuel injector in order to cause movement of a valve needle away from a valve seating to initiate fuel injection from the fuel injection system into a combustion space.

**Background of the Invention**

In conventional fuel systems, data relating to engine operation may be received by an engine control unit. The received data may comprise driver input data (e.g. from the position of the accelerator pedal), data relating to the engine speed and load, and also data relating to the particular combustion mode that the engine system is operating in. Having received the engine operation data, an engine control unit (ECU) calculates, via appropriate control algorithms, injection parameters required to operate the engine in accordance with the received data. These injection parameters may include multiple injection timings, fuel quantities, etc., depending on the engine system in question. Having calculated the required injection parameters, the control unit is adapted to output a suitable drive pulse or drive pulses to the injection system. Fuel injection is initiated at the desired stage of the injection cycle.

A problem arises due to the fact that fuel properties may vary; not only will there be variations in such properties of the same nominal fuel, but the some engines are adapted to run on more than one type or grade of fuel.

Fuel properties and in particular bulk modulus, will affect the amount of fuel injected for a set injection event, such as for a particular injection pulse sent to the injector. Bulk modulus and other parameters also affect the characteristics of pressure waves which are known to occur within an accumulator volume such as a common rail. In turn, any pressure wave compensation strategies become less accurate and effective when there is a change of bulk modulus.

It is an object of the invention to provide a method of overcoming such problems.

**Summary of Invention**

In one aspect is provided a method for determining the bulk modulus of a fuel used in a fuel injection system of an internal combustion engine, said fuel injection system including a fuel accumulator volume for the supply of fuel to one or more fuel injectors, pumping means to pressurise fuel in said accumulator volume, comprising the steps of a) implementing a pumping event, b) measuring the consequential change in pressure in said accumulator volume; and c) determining the bulk modulus from said change in pressure.

The method may include the step of determining the amount of additional fuel added to the accumulator volume as a result of said pumping event.

The method may comprise determining the consequential increase in the fuel volume added to the accumulator volume, and determining the bulk modulus K from the equation K= - VdP/dV, where V is the effective volume of the accumulator volume, and dP the change in pressure.

The method may include relating pumping event(s) to consequential pressure increases for one or more fuels having known bulk modulus, and/or comprises comparing an expected change in pressure with said measured pressure change.

The pumping means may be driven by at least one cam, and said pumping event may comprise a particular movement or rotation of said cam.

The expected pressure rise is determined from pre-determined relationships relating pressure rise to pumping action.

The pumping action is defined as a particular pumping lift or cam movement/rotation.

The method may include comparing the increase in pressure for particular pumping events.

The method may be implemented under conditions of over-run, gear change, transients or heavy load. The method may takes into account fuel temperature and/or leakage in the accumulator volume.

The accumulator volume may include a common rail.

In a second aspect is provided a fuel injection system for an internal combustion engine including means to determine the bulk modulus of a fuel used in a said fuel injection, including a fuel accumulator volume for the supply of fuel to one or more fuel injectors, pumping means to pressurise fuel in said accumulator volume, and including: a) means to implement a pumping event, b) means to measure the consequential change in pressure in said accumulator volume; c) means to determine the bulk modulus from said change in pressure.

**Brief Description of the Drawings**

Figure 1 shows a representation of a common rail fuel injection system;

Figure 2 shows a representation of a cam/plunger operated fuel pump injection system;

Figure 3a shows plots relating a pump cam profile to pumping lift percentage;

Figure 3b shows a plot relating pumping lift percentage to consequent pressure rise in a fuel rail.

## Description of the Preferred Embodiments

A typical fuel system may comprise an accumulator volume in the form of a common rail which supplies fuel under high pressure to a plurality of fuel injectors. Fuel may be supplied to the common rail from a high pressure rail supply pump, which may be provided by a number of unit pumps. Each unit pump may comprise a pumping chamber within which fuel is pressurised by a pumping plunger. Such plungers are typically driven in a reciprocating motion by a cam arrangement. The unit pumps may be supplied with relatively low pressure fuel from a transfer pump. In conventional common rail fuel systems for diesel engines, it is known to supply a drive current to a fuel injector in order to cause movement of a valve needle away from a valve seating to initiate fuel injection from the fuel injection system into the engine.

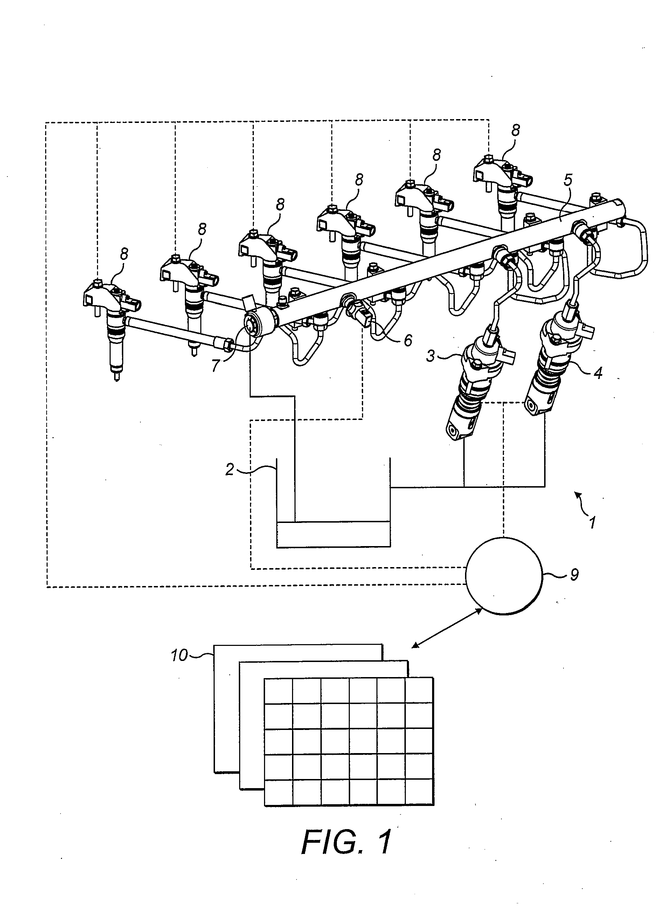

Figure 1 shows such a representation of a fuel injection system 1 within an engine comprising a fuel tank 2, controllable high pressure fuel pumps (3, 4), a common rail (common accumulator volume/fuel reservoir) 5, a common rail pressure sensor 6, a pressure limiter 7, a plurality of injectors 8 and an electronic control unit (ECU) 9. In use the ECU 9 controls pumping of fuel from the tank 2 to the rail 5 by the pumps 3, 4. The ECU 9 also controls the operation of the injectors 8 and receives sensor data on the pressure within the rail 5 from the pressure sensor 6. The ECU may store (or be in communication with via a data store) a plurality of data look-up tables 10 relating one or more injection parameters to engine data such as demanded fuel (e.g. from the position of the accelerator pedal), engine speed and load and also the particular combustion mode the engine system is operating in. The ECU may use such look up tables to calculate injection parameters required to operate the engine in accordance with the received engine data. These injection parameters may include injection timings, fuel quantities, and such like and the ECU may output a drive pulse signal (comprising one or more drive pulses) to the injectors to initiate injection.

The fuel pumps may be driven by a cam arrangement to produce a number of pumping events per engine cycle. In the arrangement depicted in figure 1, there are six injectors and two pumps and so each pump may be driven by a three-lobed cam arrangement. It is noted however that the number of injectors and/or pumps may be varied within the scope of the claimed invention.

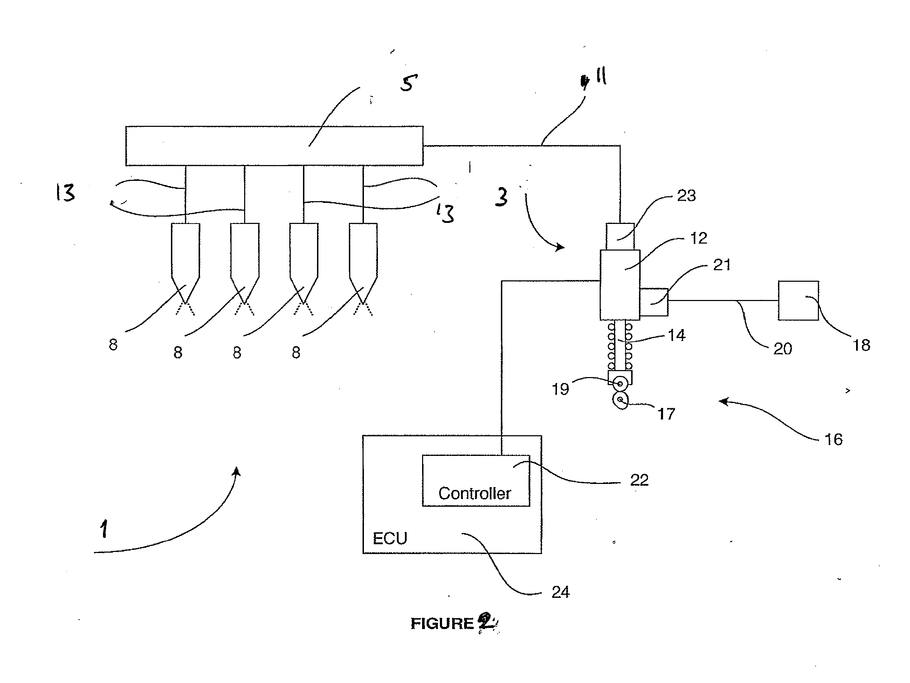

Figure 2 is a schematic diagram similar to the fuel injection system of figure 1 that is simplified for the purpose of the description and within which the present invention may be incorporated. Similar components have like reference numerals. The fuel injection system includes an accumulator volume in the form of a common rail 5 that is supplied with pressurised fuel from a high pressure rail supply pump, in the form of a unit-pump 3, via a high pressure fuel pipe 11. It should be noted that the unit-pump 3 is not shown in detail since it is not essential for understanding of the invention and the configuration of such a unit-pump 3 would be well known to the skilled reader. The common rail 5 is fluidly connected to four fuel injectors 8 by respective high pressure fuel supply pipes 13. The fuel injectors are controlled electronically to deliver fuel to an associated combustion cylinder of the engine (not shown).

The unit-pump 3 includes a pumping module 12 defining a pumping chamber (not shown) within which fuel is pressurised by an associated pumping plunger 14. The pumping plunger 14 is driven in a reciprocating motion to perform an inward, pumping stroke, and an outward, return stroke, by a cam-drive arrangement 16. In a known manner, the cam-drive arrangement 16 includes a driven cam shaft 17 having a cam surface that acts upon a roller/shoe arrangement 19 associated with the pumping plunger 14. Although only one unit-pump 3 is shown for simplicity, it should be noted that one or more of such pumps may be provided depending on the requirements of the engine installation.

The pumping chamber of the unit-pump 3 is supplied with relatively low pressure fuel from a transfer pump 18 via a low pressure supply pipe 20 and non-return valve 21. Low pressure fuel is therefore able to fill the pumping chamber when the pumping plunger 14 performs a return stroke ready for fuel pressurisation. As the cam-drive arrangement 16 drives the pumping plunger 14 on a pumping stroke, the pumping plunger 14 reduces the volume of the pumping chamber and so the fuel trapped therein is pressurised.

The pumping module 12 is provided with a rail control valve 23 which controls whether or not the pumping chamber communicates with the common rail 5 and thus controls the flow of pressurised fuel therefrom. In order to control the volume of fuel that is supplied to the common rail 5, control means in the form of a unit-pump controller 22 (hereinafter 'the controller') is provided, the functionality of which forms part of an engine control unit 24 (hereinafter 'the ECU'). The controller 22 is electrically connected to the unit-pump 3 and supplies electronic signals to the rail control valve 23.

In a simple embodiment of the invention, bulk modulus of the fuel is determined by measuring the pressure change (for example the pressure rise) consequent to a pumping event. In other words the pressure rise due to pumping is determined and from this, the bulk modulus is determined.

In general the value of bulk modulus, K, of a fluid is determined by the equation:-

$$K = -VdP/dV.$$

In a simple embodiment the amount of extra fuel, dV, added to the accumulator (common rail) volume is determined from a pumping event. For a particular pumping event, this can be determined from pump geometry or from predetermined (and thus known) characteristics and relationships as will be described hereinafter. The consequential pressure rise dP can be determined, for example by measurement by the pressure sensor. If the parameter of the fuel rail (accumulator) volume (V) is known, the bulk modulus determined from the above equation.

For a change in pumping stroke, i.e. for a particular movement of the plunger (and thus cam rotation), there will be a consequential pressure change as a result. In alternative implementations, any deviations between expected and actual (measured) pressure rises under similar conditions (pumping events such as movement of the plunger/cam) will indicate a change in bulk modulus.

The term "pumping event" should be interpreted as any pumping action in the fuel delivery system. It may be considered as a particular movement of one or more plungers in the pumps described above, or indeed any pumping action. The pumping event may be considered and interpreted as a particular rotation of a pump drive cam/camshaft.

Thus, according to examples, pressure rises consequential to a partial or full stroke of a pump (or a number of different pumping strokes) may be measured.

In relation to the above, an appropriate "transfer function" may be provided relating parameters such as the movement (rotation) of the cam, movement of the plunger, a number of pumping strokes and such like, to the amount of fuel added to the fuel rail and/or to the expected pressure rises for fuel of particular bulk moduli. Such transfer functions/relationships may be determined beforehand and stored in, e.g. the ECU, and used to implement the methodology.

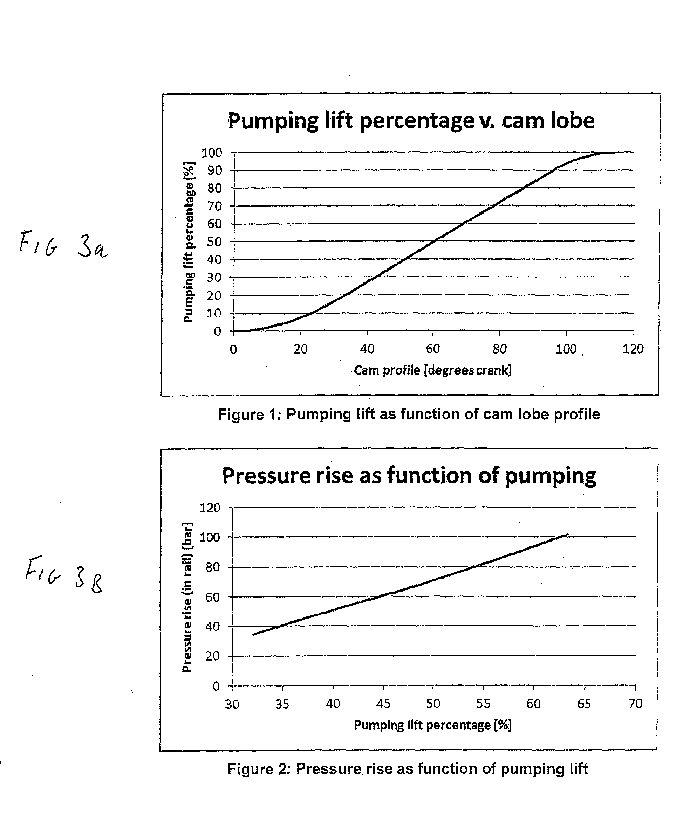

In an example, the transfer function can be regarded as a relationship between the fuel added and the pressure increase. Changes in the bulk modulus of the fuel will lead to a different pressure rise of fuel within the fuel rail for the same pumping event. Figure 3 illustrates the use of such relationships when implementing an example of the invention. Figure 3a shows a graph relating the cam rotation to the pumping lift percentage i.e. it is indicative of the cam profile. Figure 3b shows the consequential pressure rise in the fuel rail in relation to the pumping lift percentage; this is for a fuel having a particular bulk modulus. Such graphs and charts can be provided within the ECU, and compared with measured pressure rises as a result of pumping events. Thus in an example, a pumping event is provided by a particular rotation of a pump cam. The consequential pressure increase is determined and compared to that expected pressure rise, for one or more fuels with known bulk moduli. For example the expected pressure rise for fuels having one or more particular bulk moduli are stored (e.g. look-up charts/tables) and by comparison of the measured pressure with such data and where appropriate, suitable interpolation methods, the bulk modulus can be accurately determined. Thus the measured pressure rise for a particular pumping event can effectively be "mapped" to a particular bulk modulus.

Alternatively, as mentioned above, a pumping event may be related to the amount of fuel added to the system. The bulk modulus may be determined by equation 1 if the accumulator volume is known.

In preferred embodiments, the methodology is implemented under certain running conditions. For example, the methodology is preferably implemented during conditions of light or low load, as the impact of a pumping stroke will be larger. However the method may be performed under any conditions including conditions of over-run, gear change, transients and heavy load.

In preferred embodiments variations and effects such as fuel temperature and system leakage may be taken into account when implementing the methodology.

In some cases there may be overlap between pumping and injection. In more complex embodiments, this is accounted for by for example, comparing results from overrun with steady sate data.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

**Claims**

1. A method for determining the bulk modulus of a fuel used in a fuel injection system of an internal combustion engine, said fuel injection system including a fuel accumulator volume for the supply of fuel to one or more fuel injectors, pumping means to pressurise fuel in said accumulator volume, comprising the steps of

   a) implementing a pumping event,
   b) measuring the consequential change in pressure in said accumulator volume;
   c) determining the bulk modulus from said change in pressure.

2. A method as claimed in claim 1 when step c) include the step of determining the amount of additional fuel added to the accumulator volume as a result of said pumping event.

3. A method as claimed in claim 2 wherein step c) comprises determining the consequential increase in the fuel volume added to the accumulator volume, and determining the bulk modulus K from the equation K= -VdP/dV, where V is the effective volume of the accumulator volume, and dP the change in pressure.

4. A method as claimed in claim 1 including relating pumping event(s) to consequential pressure increases for one or more fuels having known bulk modulus, and wherein step c) comprises comparing an expected change in pressure with said measured pressure change.

5. A method as claimed in claims 1 to 4 when said pumping means is driven by at least one cam, and said pumping event comprises a particular movement or rotation of said cam.

6. A method wherein the expected pressure rise is determined from pre-determined relationships relating pressure rise to pumping action.

7. A method as claimed in claim 6 wherein said pumping action is defined as a particular pumping lift or cam movement/rotation.

8. A method as claimed in any preceding claim including comparing the increase in pressure for particular pumping events.

9. A method as claimed in any preceding claim which is implemented under conditions of over-run, gear change, transients or heavy load.

10. A method as claimed in any preceding claim which takes into account fuel temperature and/or leakage in the accumulator volume.

11. A method as claimed in any preceding claim wherein said accumulator volume includes a common rail.

12. A fuel injection system for an internal combustion engine including means to determine the bulk modulus of a fuel used in a said fuel injection, including a fuel accumulator volume for the supply of fuel to one or more fuel injectors, pumping means to pressurise fuel in said accumulator volume, and including:

    a) means to implement a pumping event,
    b) means to measure the consequential change in pressure in said accumulator volume;
    c) means to determine the bulk modulus from said change in pressure.

13. A system as claimed in claim 12 when means to determine the bulk modulus from said change in pressure includes means to determine the amount of additional fuel added to the accumulator volume as a result of said pumping event.

14. A system as claimed in claim 13 including means to determine the consequential increase in the fuel volume added to the accumulator volume, and means to determine the bulk modulus K from the equation K= -VdP/dV, where V is the effective volume of the accumulator volume, and dP the change in pressure.

15. A system as claimed in claim 12 to 14 including means to relate pumping event(s) to consequential pressure increases for one or more fuels having known bulk modulus, and mean to compare an expected change in pressure with the measured pressure.

16. A system as claimed in claims 12 to 15 when said pumping means is driven by at least one cam, and said pumping event comprises a particular movement or rotation of said cam.

17. A system as claimed in claim 12 to 16 having means to determine the expected pressure rise from pre-determined relationships relating pressure rise to pumping action.

18. A system as claimed in claim 17 wherein said pumping action is defined as a particular pumping lift or cam movement/rotation.

19. A system as claimed in claims 12 to 18 means to compare the increase in pressure for particular pumping events.

20. A system as claimed in claim 12 to 19 having means to takes into account fuel temperature and/or leakage in the accumulator volume.

21. A system as claimed in any of claims 12 to 20 wherein said accumulator volume includes a common rail.

FIG. 1

FIGURE 2

ECU

Controller

FiG 3a

Pumping lift percentage v. cam lobe

Figure 1: Pumping lift as function of cam lobe profile

FiG 3 B

Pressure rise as function of pumping

Figure 2: Pressure rise as function of pumping lift

EUROPEAN SEARCH REPORT

Application Number

EP 13 17 9273

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 571 319 A2 (TOYOTA MOTOR CO LTD [JP]) 7 September 2005 (2005-09-07) * paragraphs [0005], [0006], [0039] * ----- | 1-21 | INV. F02D41/00 F02D19/06 |
| X | EP 2 031 224 A2 (DENSO CORP [JP]) 4 March 2009 (2009-03-04) * paragraphs [0008], [0009], [0074], [0075], [0077] * ----- | 1-21 | |
| X | DE 10 2010 017368 A1 (DENSO CORP [JP]) 23 December 2010 (2010-12-23) * paragraphs [0006] - [0008] * ----- | 1-21 | |
| X | EP 0 860 601 A2 (TOYOTA MOTOR CO LTD [JP]) 26 August 1998 (1998-08-26) * page 2, line 45 - line 52 * * page 3, line 7 - line 12 * ----- | 1-21 | |
| A | US 2010/319445 A1 (YAMADA NAOYUKI [JP]) 23 December 2010 (2010-12-23) * paragraphs [0009] - [0012] * ----- | 1-21 | TECHNICAL FIELDS SEARCHED (IPC) F02D |

The present search report has been drawn up for all claims

| Place of search | Date of completion of the search | Examiner |
|---|---|---|
| Munich | 5 December 2013 | Jackson, Stephen |

EPO FORM 1503 03.82 (P04C01)

**ANNEX TO THE EUROPEAN SEARCH REPORT
ON EUROPEAN PATENT APPLICATION NO.**                    EP 13 17 9273

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2013

| Patent document cited in search report | | | Publication date | Patent family member(s) | | | Publication date |
|---|---|---|---|---|---|---|---|
| EP | 1571319 | A2 | 07-09-2005 | CN | 1664338 | A | 07-09-2005 |
| | | | | EP | 1571319 | A2 | 07-09-2005 |
| | | | | JP | 4052261 | B2 | 27-02-2008 |
| | | | | JP | 2005248757 | A | 15-09-2005 |
| | | | | KR | 20060043230 | A | 15-05-2006 |
| | | | | US | 2005193982 | A1 | 08-09-2005 |
| EP | 2031224 | A2 | 04-03-2009 | EP | 2031224 | A2 | 04-03-2009 |
| | | | | US | 2009056678 | A1 | 05-03-2009 |
| DE | 102010017368 | A1 | 23-12-2010 | CN | 101929395 | A | 29-12-2010 |
| | | | | DE | 102010017368 | A1 | 23-12-2010 |
| | | | | JP | 4844651 | B2 | 28-12-2011 |
| | | | | JP | 2011001917 | A | 06-01-2011 |
| | | | | US | 2010324803 | A1 | 23-12-2010 |
| EP | 0860601 | A2 | 26-08-1998 | DE | 69809614 | D1 | 09-01-2003 |
| | | | | DE | 69809614 | T2 | 10-04-2003 |
| | | | | EP | 0860601 | A2 | 26-08-1998 |
| | | | | JP | 3796912 | B2 | 12-07-2006 |
| | | | | JP | H10299557 | A | 10-11-1998 |
| US | 2010319445 | A1 | 23-12-2010 | CN | 101929394 | A | 29-12-2010 |
| | | | | DE | 102010017325 | A1 | 20-01-2011 |
| | | | | JP | 4911199 | B2 | 04-04-2012 |
| | | | | JP | 2011001842 | A | 06-01-2011 |
| | | | | US | 2010319445 | A1 | 23-12-2010 |

EPO FORM P0459

For more details about this annex : see Official Journal of the European Patent Office, No. 12/82